# EUROPEAN PATENT APPLICATION

(11) **EP 4 517 544 A1**
(43) Date of publication of application: **05.03.2025**
(21) Application number: 23193970.3
(22) Date of filing: 29.08.2023
(51) Int. Cl.: G06F 15/78

(54) **MAINTAINING MEMORY CONTENT WITH BITSTREAM SEGMENT LOCKING**

(71) Applicant: Siemens Aktiengesellschaft, 80333 München (DE)
(72) Inventor: Hinterstoisser, Thomas, 2102 Bisamberg (AT); Matschnig, Martin, 3430 Tulln (AT); Cech, Christian, 2483 Ebreichsdorf (AT); Fischer, Berhard, 2122 Wolkersdorf im Weinviertel (AT); Chilku, Bekim, 1190 Wien (AT)
(74) Representative: Siemens Patent Attorneys

(57) **Abstract**

Present invention concerns a method of operating a Field Programmable Gate Array (100), FPGA. The FPGA (100) comprises one or more Partial Reconfigurable, RS, slots (160, 260). The method comprises reconfiguring at least one of the PR slots (160, 260), wherein reconfiguring comprises replacing a first image (240A-D) of a first application installed on the PR slot (160, 260) with a second image (240A-D) of a second application, wherein at least a part of a memory content of the first application is kept for the second application.

The invention also concerns related devices.

## Description

Present invention concerns Field Programmable Field Arrays (FPGA) and their operation.

### Background of the Invention

Modern FPGAs may have the capability to reconfigure parts of themselves during run-time, while the rest of the FPGA may execute an application without interruption. Such reconfigurable parts may be referred to as Partial Reconfiguration (PR) slot, the functionality may be referred to as Dynamical Partial Reconfiguration (DPR).

### Disclosure of the Invention

A problem underlying the invention consists in providing an improved technique to utilize DPR functionality efficiently, in particular for neural networks, and/or sequentially operated applications.

The invention solves the given problem by means of subjectmatter defined in enclosed independent claims. Dependent claims describe preferred embodiments.

There is disclosed a method of operating a Field Programmable Gate Array (FPGA). The FPGA comprises one or more Partial Reconfigurable, PR slots. The method comprises reconfiguring at least one of the PR slots, wherein reconfiguring comprises replacing a first image of a first application installed on the PR slot with a second image of a second application. At least a part of a memory content (also referred to as kept content) of the first application is kept for the second application. This allows re-use of content and/or memory between applications, with limited overhead for copying the content to be kept between the PR slot and system memory (memory outside of the PR slot). For example, there may be instances in which an image to be installed may operate sequentially to an image to be replaced, for example requiring, as input, data produced by the earlier image as output. Copying such data before and after installing the new image may be time consuming and complicated, in particular may block ongoing operation of an operation region of the FPGA (which may be not dynamically reconfigurable).

The part of the memory content kept may be kept without copying the content to the installed second image and/or installed second application. This may facilitate an early start of the second application with access to the kept content, and/or may omit a process of writing the kept content into the newly installed application.

Replacing may be performed based on masking information. The masking information may indicate which part or parts of memory to keep and/or which part or parts of content to keep. A memory part to be kept may be a memory part for which no change in content is intended during reconfiguration. The masking information may be provided by the first application, and/or a controller, and/or an external source like a repository. The masking information in some cases may represent a bit map and/or a table indicating which memory parts and/or which content to keep, and/or which memory parts and/or content not to keep, e.g., to change and/or delete and/or reinitialize. In some cases, the masking information may be implemented as segment memory locking table, indicating which parts or segments of the memory to lock or protect from change. Such masking information may provide information on how to treat memory and/or content efficiently.

It may be considered that re-initializing memory parts with content not to be kept is performed. There may be a general function of re-initializing any memory not indicated to be kept and/or not locked from change. Thus, a well-defined state of the second application may be achieved.

The first application may represent a leading layer of a neural network providing output, and the second application may represent a trailing layer of the neural network utilizing the output as input. A leading layer may be a layer directly before the trailing layer, allowing re-use of data between layers with limited copying. The approaches described herein are particularly well-suited for neural networks, as layers may be directly mapped to PR slots, and after a layer has been executed, the trailing layer may easily access the output as its own input. Any input or hidden layer may be a leading layer, any hidden or output layer may be a trailing layer; leading and trailing layers may be sequential and/or neighboring in execution to each other.

It may be considered that the second image is adapted such that the second application accesses the memory content kept. This may include providing, in the image, information indicating location and/or format of the content. Alternatively, or additionally, the first image and/or first application may be adapted to indicate memory parts to be kept and/or content to be kept, and/or location and/or format of such. Location of memory may pertain to address and/or address range, and/or cell or block. This may lower supervision functionality assigned to a controller.

In some cases, reconfiguring the at least one PR slot may comprise omitting memory parts comprising content to be kept for the second application from re-initialization and/or overwriting; this may be considered protecting them from change. This may facilitate keeping the content without requiring copying before installing the second image.

Reconfiguring the at least one PR slot may comprise updating the second image based on masking information. Updating may include adapting the second image such that kept content is to be installed with the second image. Thus, copying back content kept (which may have to be stored in a system memory outside the PR slot) and/or storage use for content kept may be limited. The second image may be retrieved from a repository, and may be updated based on the retrieved image before and/or during installation on the PR slot.

Content to be kept (kept content) for the second application may be stored in a different memory part of the PR slot after reconfiguration. This may in particular be achieved when updating the second image. This allows optimizing memory use, and/or accommodating possible changes in memory structure when reconfiguring.

The reconfiguration may in particular be performed at run-time, e.g., while the FPGA executes one or more other applications, and/or after the first application has finished a task, but before a desired overall result is achieved. PR slot resources may be optimized for different applications, allowing efficient operation of the FPGA even with limited resources, in particular when sequentially operating applications are required that may be executed with the resources of the same PR slot.

Moreover, there is described a controller for a Field Programmable Gate Array. The controller is adapted to control a method as described herein. The controller may comprise one or more components, and/or may be part of, and/or represent processing circuitry. The controller may be and/or comprise a microcontroller and/or microchip and/or processor and/or processor core.

A Field Programmable Gate Array is considered. The FPGA comprises a controller as described herein, and/or is adapted to perform a method as described herein.

There is considered a computer program product, the computer program product comprising instructions causing processing circuitry to perform a method as described herein when executed on the processing circuitry. The instructions may be computer-executable. The processing circuitry may comprise, and/or be implemented as, a FPGA and/or controller as described herein. The computer program product may comprise one or more modules associated to each action of the method, e.g., a module for replacing and/or reconfiguring and/or installing, and/or a module for retrieving an image, and/or a module for providing masking information, and/or a module for obtaining masking information, and/or a module for masking memory to be kept, and/or a module for updating, and/or a module for copying kept content.

Furthermore, a storage medium storing a computer program product as described herein is proposed. The storage medium may comprise and/or be implemented as one or more memories and/or have different parts or components of the program product stored on different memories or media. The storage medium may be non-transitory. It may be considered that the storage medium may be computer-readable.

At least a part of a memory content of the first application being kept for the second application may in particular refer to the kept content being available for the second application after installing the second image, and/or when the second application starts. It may exclude the second application copying and/or receiving the kept content from a source outside the PR slot during its execution. On different PR slots, there may be installed different (first) images and/or applications, and/or replaced different (second) images and/or applications. Installing the second image may generally be considered to represent replacing the first image, and/or to represent reconfiguring the PR slot. An image may in general indicate the application to be executed and/or functionality of components of the PR slot, e.g., provided for the application to be executed.

Memory content may in general represent data, e.g., in a bit structure, for example, byte-based, and/or word-based, and/or representing numerical information, and/or string and/or character information. Content may be stored in memory parts, e.g., one or more memory addresses or address ranges, and/or blocks and/or cells. The memory and/or memory parts may be local to the PR slot. In general, different parts of kept content may be differently kept; for example, part of it may be updated into the second image, part may be locked in the memory. Different parts of content kept may be kept differently based on type. For example, control-type information, e.g., for operation or functionality of the second application, may be updated (in particular weights for a neural network layer); input data to be processed, for example, may be locked in memory (this may represent output). This may help correctly setting up the second application quickly, while avoiding copying data to be processed.

A PR slot in general may have a preconfigured size, which may not be dynamically reconfigurable. A PR slot may comprise different components, e.g., control components (e.g., like processor resources, in particular of a DSP), and/or memory components, e.g., a plurality of cells and/or blocks of memory, and/or programmable logic, for example ALM components. Different images or applications may in particular be based on reconfigured programmable logic. The memory structure, e.g., size, number of cells, and/or addressing, of a PR slot may be constant under dynamic reconfiguration.

The method may especially be carried out, completely or in part, by electronic execution means like a computer system. To these ends, the method may be formulated as a computer program product with program code means. The above-described system may comprise the computer system. Advantages or features of the method may apply to the method and vice versa.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary FPGA; and
- Figure 2: shows an exemplary reconfiguration according to the invention.

### Detailed Exemplary Embodiments of the Invention

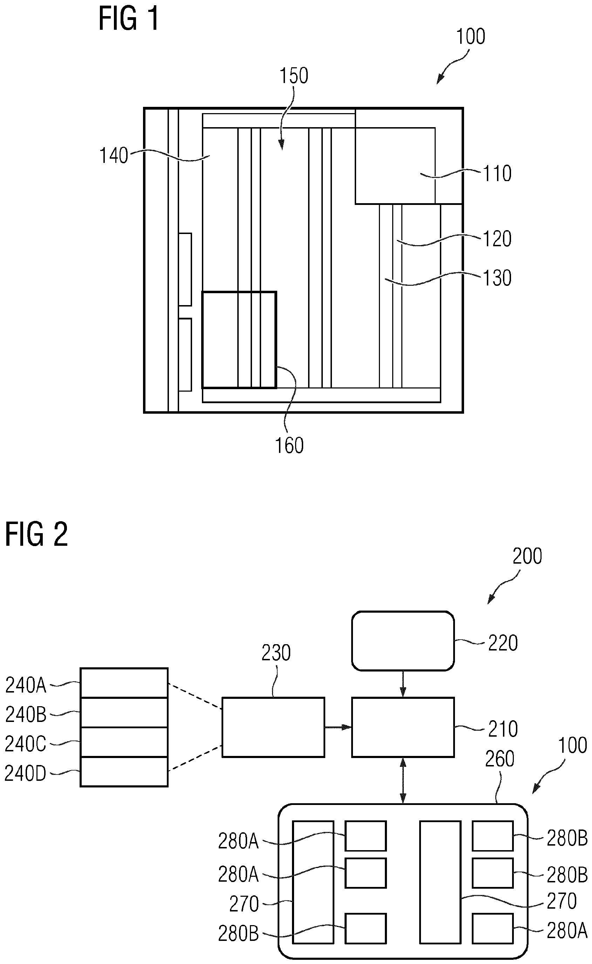

Figure 1 shows an exemplary FPGA 100 in a simplified diagram. For ease of reference, components most illustrative for the understanding the invention are referenced. Functional components of an FPGA may correspond to regions and/areas of the surface of the FPGA. Some of the functional components of an FPGA 100 may comprise a controller 110 (e.g., a microcontroller and/or processor, e.g., an ARM processor), one or more DSP (Digital Signal Processor) regions 120, and/or one or more memory regions 130, as well as one or more ALM (Adaptive Logic Module) and/or distributed memory regions 140; a region, in particular region 140, may comprise functional blocks associated to the corresponding functionality, which may be adaptive.

The FPGA 100 may comprise an operation region 150, which may be adaptive when setting up the FPGA 100, but not during run-time of one or more applications. This region may be referred to as statically reconfigurable. While operation region 150 may be specifically configured for functionality when setting up the FPGA for operation, during actually executing one or more application (run-time), its functionality may be static or non-configurable. That does not preclude running software and/or applications on them which may perform dynamically, it refers to the logic functionality/hardware setup.

The FPGA may also comprise one or more dynamically reconfigurable regions 160, which may be referred to as PR slot/s.

Regions 150 and 160 may each comprise parts of functional regions or components 120, 130, 140. Next to the components mentioned, the FPGA may comprise further components, e.g., for interfacing, and/or Input/Output, power supply, connectivity, etc. Memory region 130 may comprise memory cells or blocks, e.g., BRAM cells. Memory cells or blocks may be individually addressable and/or controllable, e.g., by a memory controller and/or controller 110.

A PR slot 160 may be reconfigurable during run-time, e.g., under control of a DPR controller. The DPR controller may be implemented by the controller 110, or separately thereof. The regions 160 may have rectangular form on the surface of the FPGA 100. Dynamic reconfiguration may refer to re-configuring the functionality/functional blocks or components in region to provide different logic and/or functionality; the size, and/or components available in a PR slot 160 may be fixed during run-time (although in some cases, such may be configurable when setting up the FPGA and/or the operation region 150).

A PR-slot may execute an application, e.g., a hardware (HW) application, requiring a size equal or smaller than the size of the PR-slot. The size of the PR-slot may refer to the area size, and/or available memory and/or logic components (e.g., ALM), and/or processing and/or control capacity, e.g., in a DSP component. An application using the available size and/or functionality may be dynamically installed on a PR-slot, e.g., based on an image of the application. Such an image may be referred to as a bitstream, and/or be represented as file or multiple files. The image may define the logic and/or functionality and/or application of a PR slot 160 when installed on the PR slot 160. Installation may be controlled by a DPR controller. Installation during run-time, replacing an earlier installed image, may be referred to as dynamic reconfiguration, or shorter reconfiguration.

In general, dynamic reconfiguration may include initializing memory of the PR slot 160, e.g., setting the memory to a predefined initial state. This may delete data in the memory; if the data (or part of it) is to be used by a new image or application, a lot of copying data from the memory of the PR slot to operation or system memory and back, before and after installing the new image, may be necessary, which can be time consuming, and may interfere with ongoing execution of application/s on the operation region.

It is proposed to provide reconfiguration functionality that provides a new image with memory content of an earlier image to be replaced (by the new image).

Figure 2 shows an example of inventive dynamical reconfiguration of reconfiguration functionality 200 of a FPGA, e.g., a FPGA 100 of Figure 1. A DPR controller 210 may be adapted to reconfigure and/or control reconfiguration of a PR slot 260, which may correspond to PR slot 160 of Figure 1. The DPR controller 210 may access a repository or data base 230, which may store one or more images or bitstreams 240A-240D. The DPR controller may retrieve one of the images 240A-D from the repository 230 to install over an earlier image already installed an executed on the PR slot 260. In general, a repository may represent one or more data sources and/or data bases.

An image may represent an application and/or HW application and/or program to be executed on the PR slot. Different images may represent different applications. In general, an image may be adapted to be operable as application on the PR slot, e.g., in terms of size and/or compatibility with PR slot functionality. Reconfiguration may generally comprise and/or be based on replacing an installed image or application (first image and/or first application) with a new image or application (second image and/or second application). First and second image, and/or first and second application, may be different. It should be noted that terms like "first" and "second" may be relative to each other, not necessarily absolute; in particular, a first image may be the image before the second image, not necessarily the first image to the installed.

The repository 230 may be internal to the FPGA, or external, e.g., on an external or peripheral storage, e.g., on one or more of at least one hard-disk and/or SSD (Solid Storage Device) and/or optical readable storage (e.g., Blue-ray and/or DVD-based), and/or a cloud storage.

The PR slot 260 may comprise a programmable logic component 270, which may correspond to components DSP 120 and/or ALM 140 of Figure 1. Moreover, there may be a memory component, which may comprise one or more memory parts 280A that should have the same content after reconfiguration (also referred to as kept content), and one or more memory parts 280B which may be re-initialized, and/or may have unspecified content after reconfiguration. A memory part may correspond to one or more memory addresses and/or ranges and/or blocks and/or cells.

The DPR controller 210 may obtain masking information 220; reconfiguration may in general be performed based on such information 220.

Masking information 220 may indicate which memory cells and/or addresses and/or parts not to re-initialize, and/or which content such memory parts should have. The masking information 220 may in general indicate in which memory parts output (and/or kept content) of an image or application to be replaced is stored, and/or which kept content is stored, and/or which kept content is stored in which memory part/s, and/or which memory parts may be re-initialized and/or do not need to store the same content after re-initialization.

Masking information 220 may be provided by the PR slot 260 and/or an application or image to be replaced, which may for example provide an indication where kept content like its output, or part of its output, or other relevant information is stored. Alternatively, or additionally, the DPR controller 210, and/or the repository, and/or the image 240 A, B, C or D, to be installed may provide masking information 220 (or parts thereof). Images 240A-D may be adapted to accommodate for using memory content (e.g., for being installed), and/or indicating such content (e.g., when being replaced).

The DPR controller 210, and/or reconfiguration functionality 200, may be adapted to reconfigure the PR slot 260 such that the memory content of the indicated memory parts 280A is the same before the reconfiguration as after the reconfiguration, and/or replacing the first image with the second image. This may be achieved by omitting these memory parts from re-initialization. This approach may be referred to as Bitstream Segment Locking, as parts (segment/s) of the PR slots and/or memory may be considered locked from being changed when installing the new image or bitstream.

Alternatively, or additionally, it may be considered that an image to be installed is updated based on the masking information before installation. The memory content obtained from the image or application to be replaced may thus be rewritten into the memory parts or addresses (instead of re-initialization). For this variant, it may be considered to write the content into different memory parts, e.g., indicating such to or with the new image; thus, the kept content may be made available at a more convenient memory part. Updating the image may be based on, and/or include, reading out the kept content before installing the new image.

Reconfiguration functionality 200 may in general be implemented as processing circuitry adapted to control reconfiguration as described herein, which may include processing circuitry for controlling the reconfiguration of the PR slots 260; in some cases, it may include the PR slot/s.

A neural network may generally be an artificial neural network; in some cases, it may be referred to a model, and/or represented by a model. The neural network may comprise multiple layers. The layers may be of different type; in particular, the network may comprise an input layer, for receiving data to be evaluated and/or as training data as input or base data, and an output layer, providing processed data as output and/or result. Between input layer and output layer, there may be one or more hidden layers, which may be interconnected to receive output of one layer as input, and/or to provide its output as input for another layer. The neural network may be linear, or non-linear. In some cases, the neural network may be recursive, e.g., such that the same layer (at least one layer) may be provided with output of a layer (e.g., itself, or a different layer) multiple times. A layer may operate based on matrix multiplication being applied on input. In some cases, a layer may operate based on convolution being applied on input. Base input may correspond to original data the network as a whole is intended to operate on to provide a result, which may be considered output of the last/output layer and/or the neural network as a whole.

In some variants, the neural network may be a CNN (Convolutional Neural Network), and/or may be utilized for object detection, and/or image analysis. It may be considered that in general, the neural network already may be trained and/or may be pre-trained, and/or that the neural network and/or its layers are implemented in a trained form; execution of the network may comprise, and/or pertain to (and/or be limited to), using the trained network, and/or using the network for inference. A layer of the neural network may be implemented as application (based on an installed image) in a reconfigurable slot of an FPGA.

A local memory may be addressable and/or connected to a controller and/or operation range via a data bus and/or DMA (Direct Memory Access). In some cases, local memory of one PR slot may not be accessible by another PR slot and/or an operation region without using DMA and/or the data bus, and/or without instruction and/or control by a controller, which may be external to the PR slot, and/or may the controller of the FPGA and/or the DPR controller.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

### Reference List

- 100: FPGA
- 110: controller
- 120: DSP region
- 130: memory region
- 140: ALM region
- 150: operation region
- 160: PR slot

- 200: Reconfiguration functionality
- 210: DPR controller
- 220: Memory mask
- 230: repository
- 240A-240D: image
- 260: PR slot
- 270: programmable logic
- 280A: memory with maintained content
- 280B: memory with re-initialized content

## Claims

1. Method of operating a Field Programmable Gate Array (100), FPGA, the FPGA (100) comprising one or more Partial Reconfigurable, RS, slots (160, 260), the method comprising reconfiguring at least one of the PR slots (160, 260), wherein reconfiguring comprises replacing a first image (240A-D) of a first application installed on the PR slot (160, 260) with a second image (240A-D) of a second application, wherein at least a part of a memory content of the first application is kept for the second application.

2. Method according to claim 1, wherein the part of the memory content kept is kept without copying the content to the installed second image (240A-D) and/or installed second application.

3. Method according to one of the preceding claims, wherein replacing is performed based on masking information (220), the masking information (220) indicating which part or parts of memory (280A) to keep and/or which part or parts of content to keep.

4. Method according to one of the preceding claims, wherein the method comprises re-initializing memory parts (280B) with content not to be kept.

5. Method according to one of the preceding claims, wherein the first application represents a leading layer of a neural network providing output, and the second application represents a trailing layer of the neural network utilizing the output as input.

6. Method according to one of the preceding claims, wherein the second image (240A-D) is adapted such that the second application accesses the memory content kept.

7. Method according to one of the preceding claims, wherein reconfiguring the at least one PR slot (160, 260) comprises omitting memory parts (280A) comprising content to be kept for the second application from re-initialization and/or overwriting.

8. Method according to one of the preceding claims, wherein reconfiguring the at least one PR slot (160, 260) comprises updating the second image based on masking information (220).

9. Method according to one of the preceding claims, wherein content to be kept for the second application is stored in a different memory part of the PR slot after reconfiguration.

10. Method according to one of the preceding claims, wherein the reconfiguration is performed at run-time.

11. Controller (110, 210) for a Field Programmable Gate Array (100), FPGA, the controller (110, 210) being adapted to control a method according to one of the preceding claims.

12. Field Programmable Gate Array (100), FPGA, comprising a controller (110, 210) according to claim 11, and/or being adapted to perform a method according to one of claims 1 to 10.

13. Computer program product, the computer program product comprising instructions causing processing circuitry (100, 110, 210) to perform a method according to one of claims 1 to 10 when executed on the processing circuitry (100, 110, 210) .

14. Storage medium storing a computer program product according to claim 13.
